# EUROPEAN PATENT APPLICATION

(11) **EP 4 704 457 A1**
(43) Date of publication of application: **04.03.2026**
(21) Application number: 23934407.0
(22) Date of filing: 24.04.2023
(51) Int. Cl.: H04W 12/50, H04W 4/80, H04W 12/06, H04W 76/10, H04W 76/11

(54) **COMMUNICATION CONNECTION METHOD AND APPARATUS, DEVICE, AND STORAGE MEDIUM**

(71) Applicant: Beijing Xiaomi Mobile Software Co., Ltd., Beijing 100085 (CN); Xiaomi EV Technology Co., Ltd., Beijing 100176 (CN)
(72) Inventor: QIAO, Guangjun, Beijing 100085 (CN); GAO, Yufei, Beijing 100085 (CN); CHI, Yubo, Beijing 100085 (CN); YU, Fan, Beijing 100176 (CN); YU, Lei, Beijing 100085 (CN); CHEN, Wenxuan, Beijing 100085 (CN); SONG, Tian, Beijing 100085 (CN)
(74) Representative: Gunzelmann, Rainer
(86) International application number: PCT/CN2023/090451
(87) International publication number: WO 2024/221202

(57) **Abstract**

The present disclosure provides a communication connection method and apparatus, a device, and a storage medium. The method comprises: receiving first information broadcasted by a second device, wherein the second device is a device to which a first device is to be communicatively connected, the first information comprises a pairing code, and the pairing code is used for connecting the first device to the second device, and, on the basis of the pairing code, requesting to establish a communication connection to the second device. The present disclosure provides a method for seamless connection between devices, the efficiency is high, the operation is convenient, and the user experience can be improved.

## Description

### TECHNICAL FIELD

The disclosure relates to the field of communication technologies, and in particular to a method and an apparatus for communication connection, a device, and a storage medium.

### BACKGROUND

In a communication system, devices usually need to establish a communication connection (such as a Bluetooth connection, a near field communication (NFC) connection, etc.) to perform low-cost, low-power private communication. However, in establishing the Bluetooth connection or the NFC connection between devices, a user is usually required to perform certain operations, for example, requiring the user to compare connection pairing codes, or requiring the user to manually click a "confirm to connect" button. Thus, the convenience of the Bluetooth connection process or the NFC connection process is relatively low, affecting user experience.

### SUMMARY

The disclosure provides a method and an apparatus for communication connection, a device, and a storage medium.

In a first aspect, embodiments of the disclosure provide a method for communication connection. The method includes: receiving first information broadcasted by a second device, in which the second device is a device that is to conduct a communication connection with the first device, the first information includes a pairing code, and the pairing code is used by the first device in connecting to the second device; and requesting to establish a communication connection with the second device based on the pairing code.

In a second aspect, embodiments of the disclosure provide a method for communication connection. The method includes: broadcasting first information, in which the first information includes a pairing code, and the pairing code is used in connecting to the second device; and in response to determining that a first device requests to connect to the second device, verifying the first device.

In a third aspect, embodiments of the disclosure provide a communication apparatus. The apparatus includes: a transceiver module, configured to receive first information broadcasted by a second device, in which the second device is a device that is to conduct a communication connection with the first device, the first information includes a pairing code, and the pairing code is used by the first device in connecting to the second device; and a processing module, configured to request to establish a communication connection with the second device based on the pairing code.

In a fourth aspect, embodiments of the disclosure provide a communication apparatus. The apparatus includes: a transceiver module, configured to broadcast first information, in which the first information includes a pairing code, and the pairing code is used in connecting to a second device; and a processing module, configured to, in response to determining that a first device requests to connect to the second device, verify the first device.

In a fifth aspect, embodiments of the disclosure provide a communication device. The communication device includes a processor. When the processor calls a computer program in a memory, the method as described in the first aspect or the second aspect is performed.

In a sixth aspect, embodiments of the disclosure provide a communication device. The communication device includes a processor and a memory. The memory is stored with a computer program; and the processor is configured to execute the computer program stored in the memory, so that the communication device performs the method as described in the first aspect or the second aspect.

In a seventh aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect or the second aspect.

In an eighth aspect, embodiments of the disclosure provide a communication system. The system includes the communication apparatus as described in the third aspect and the communication apparatus as described in the fourth aspect, or the system includes the communication device as described in the fifth aspect, or the system includes the communication device as described in the sixth aspect, or the system includes the communication device as described in the seventh aspect.

In a ninth aspect, embodiments of the disclosure provide a computer-readable storage medium. The computer-readable storage medium is configured to store instructions used by the terminal. When the instructions are executed, the terminal performs the method as described in the first aspect or the second aspect.

In a tenth aspect, embodiments of the disclosure provide a computer program product including a computer program. When the computer program is running on a computer, the computer is caused to perform the method as described in the first aspect or the second aspect.

In an eleventh aspect, embodiments of the disclosure provide a chip system. The chip system includes at least one processor and an interface and is configured to support the network device to perform functions involved in the first aspect or the second aspect, for example, to determine or process at least one of data or information involved in the above methods. In a design, the chip system further includes a memory. The memory is configured to save a necessary computer program and data for the network side device. The chip system may be constituted by a chip or may include a chip and other discrete devices.

In a twelfth aspect, embodiments of the disclosure provide a computer program. When the computer program is running on a computer, the computer is caused to perform the method as described in the first aspect or the second aspect.

### BRIEF DESCRIPTION OF THE DRAWINGS

The above-mentioned and/or additional aspects and advantages of the disclosure are become apparent and readily appreciated from the following description of embodiments, taken in combination with the accompanying figures.
FIG. 1 is a diagram illustrating an architecture of a communication system according to an embodiment of the disclosure.
FIG. 2A is a flow chart illustrating a method for communication connection according to another embodiment of the disclosure.
FIG. 2B is a flow chart illustrating a method for communication connection according to another embodiment of the disclosure.
FIG. 3 is a flow chart illustrating a method for communication connection according to yet another embodiment of the disclosure.
FIG. 4A is a flow chart illustrating a method for communication connection according to yet another embodiment of the disclosure.
FIG. 4B is a flow chart illustrating a method for communication connection according to yet another embodiment of the disclosure.
FIG. 5 is a flow chart illustrating a method for communication connection according to yet another embodiment of the disclosure.
FIG. 6 is a flow chart illustrating a method for communication connection according to yet another embodiment of the disclosure.
FIG. 7 is a flow chart illustrating a method for communication connection according to yet another embodiment of the disclosure.
FIG. 8 is a flow chart illustrating a method for communication connection according to yet another embodiment of the disclosure.
FIG. 9 is a block diagram illustrating a communication apparatus according to an embodiment of the disclosure.
FIG. 10 is a block diagram illustrating a communication apparatus according to an embodiment of the disclosure.
FIG. 11 is a block diagram illustrating a communication device according to an embodiment of the disclosure.
FIG. 12 is a block diagram illustrating a chip according to an embodiment of the disclosure.

### DETAILED DESCRIPTION

Reference are now made in detail to the example embodiments, examples of which are illustrated in the accompanying figures. When the following description refers to the accompanying figures, the same numerals in different figures refer to the same or similar elements, unless otherwise indicated. The implementations described in the following example embodiments do not represent all implementations consistent with embodiments of the disclosure. Rather, they are merely examples of devices and methods consistent with some aspects of embodiments of the disclosure as recited in the appended claims.

Terms used in the embodiments of the disclosure are for the purpose of describing specific embodiments only and are not intended to limit the embodiments of the disclosure. As used in the embodiments of the disclosure and the appended claims, the singular forms "a/an" and "the" are also intended to include the plural forms, unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used here may be interpreted as "in a case that" or "when" or "in response to determining".

Embodiments of the disclosure are described in detail below, and examples of the embodiments are illustrated in the accompanying figures, throughout which the same or similar symbols indicate the same or similar elements. The embodiments described below with reference to the accompanying figures are illustrative and are intended to be used to explain the disclosure and are not to be construed as a limitation of the disclosure.

In related art, to ensure that no user operation is required when connecting between devices and to achieve a seamless connection between devices, a just work pairing method is proposed. The just work pairing method is a simple Bluetooth pairing method stipulated by the Bluetooth protocol. This pairing method does not require user intervention and does not need any pairing code. However, the just work pairing method is susceptible to man-in-the-middle attacks and has significant security risks.

In this case, the disclosure provides highly secure seamless methods for communication connection.

In order to better understand the methods for information processing in embodiments of the disclosure, a communication system to which the embodiments of the disclosure are applicable is described below.

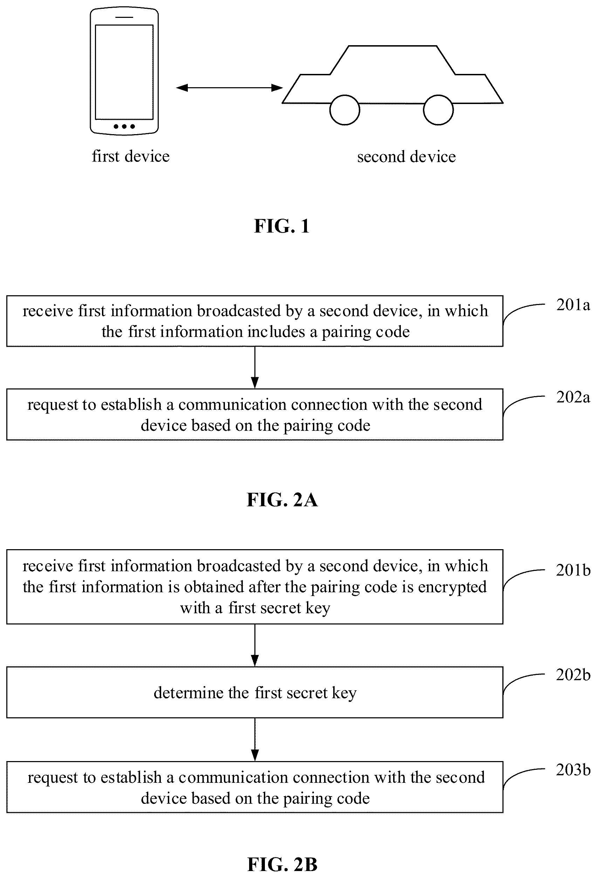

FIG. 1 is a schematic diagram illustrating an architecture of a communication system according to an embodiment of the disclosure. The communication system may include, but is not limited to, at least one first device, at least one sever and at least one second device. The first device may be a terminal device, a wearable device, or a vehicle. The second device may be a device that is to conduct a communication connection with the first device. Foe example, the second device may be a terminal device, a wearable device, or a vehicle. The number and forms of the devices illustrated in FIG. 1 are only for example and do not constitute a limitation to embodiments of the disclosure, and one or more first devices and one or more second devices may be included in practical applications. The communication system as illustrated in FIG. 1 includes one first device, such as a terminal, and one second device, such as a vehicle.

It needs to be noted that the technical solution in embodiments of the disclosure is applicable to various communication systems, such as a long term evolution (LTE) system, a 5th generation (5G) mobile communication system, a 5G new radio (NR) system or other future new mobile communication systems.

The terminal in embodiments of the disclosure is an entity, at a user side, for receiving or transmitting a signal, for example, a mobile phone. The terminal may be referred to as a user equipment (UE), a mobile station (MS), a mobile terminal (MT), etc. The terminal may be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology and a specific device form adopted by the terminal are not limited in embodiments of the disclosure.

It may be understood that, the communication system described in embodiments of the disclosure is intended to explain technical solutions of embodiments of the disclosure more clearly and does not constitute a limitation to the technical solutions according to embodiments of the disclosure. Those skilled in the art may know that, with evolution of a system architecture and emergence of a new service scenario, the technical solutions according to embodiments of the disclosure are also applicable to similar technical problems.

In addition, the following points are explained to facilitate understanding of the embodiments of the disclosure.

First, in the disclosure, without conflict, each step in any implementation or embodiment may be implemented as an independent embodiment. Steps may be combined arbitrarily. For example, a solution obtained by removing partial steps from an implementation or an embodiment constitutes an independent embodiment, and sequence of steps within an implementation or an embodiment may be exchanged arbitrarily. Optional approaches or examples within an implementation or an embodiment may be combined arbitrarily. In addition, implementations or embodiments may be combined arbitrarily. For example, partial or all steps from different implementations or embodiments may be combined arbitrarily. Any implementation or embodiment may be combined with optional approaches or optional examples from other implementations or embodiments.

Second, regarding expressions in the disclosure such as: "A or B", "A and/or B", "at least one of A and B", "in one case A, in another case B", "in response to one case A, in response to another case B", these expressions may include at least one of the following schemes based on actual circumstances: executing A irrespective of B, i.e., executing A in some implementations; executing B irrespective of A, i.e., executing B in some implementations; selecting from executions of A and B, i.e., selectively executing A or B in some implementations; or executing both A and B, i.e., executing A and B in some implementations.

Third, each element, row, or column in tables involved in the disclosure may be implemented as an independent embodiment, and any combination of elements, rows, or columns may be implemented as an independent embodiment.

Fourth, in some implementations or embodiments, "including A", "containing A", "for indicating A", or "carrying A" in the disclosure may be interpreted as directly carrying A, or may be interpreted as indirectly indicating A.

Fifth, in some implementations or embodiments, expressions such as "in response to...", "in a case that...", "when...", "if...", "in case...", etc., in the disclosure may be used interchangeably.

FIG. 2A is a flow chart illustrating a method for communication connection according to another embodiment of the disclosure. The method is performed by a first device. As illustrated in FIG. 2A, the method may include the following.

At step 201a, first information broadcasted by a second device is received. The first information includes a pairing code.

For example, in some embodiments, the second device is a device that is to conduct a communication connection with the first device. For example, the second device may be a device that is to conduct a Bluetooth connection and/or an NFC connection with the first device.

For example, in some embodiments, the first information may include a pairing code. For example, the pairing code may be a pairing code corresponding to the second device, and the pairing code is used by the first device in connecting to the second device.

At step 202a, a communication connection is requested to be established with the second device based on the pairing code.

For example, in some embodiments, the method of requesting to establish the communication connection with the second device by the first device based on the pairing code may include the following. The pairing code is carried in a connection establishment request and is sent to the second device, to request to establish the communication connection with the second device. For example, after the second device receives the connection establishment request sent by the first device, the second device may first verify the first device based on the pairing code in the connection establishment request, and in a case where the verification is passed, the second device may establish the communication connection with the first device. For a detailed introduction regarding the verification of the first device by the second device, reference may be made to corresponding embodiments related to the second device side later.

With reference to the content of the above steps 201a to 202a, it may be seen that in the method for communication connection of the embodiments of the disclosure, when the first device needs to connect to the second device, the first device may obtain the first information broadcasted by the second device, in which the first information includes the pairing code. Then, the first device may directly establish the communication connection with the second device based on the pairing code. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience.

In conclusion, in the method for communication connection according to the embodiments of the disclosure, the first device receives the first information broadcasted by the second device, in which the first information includes the pairing code. The pairing code is used by the first device in connecting to the second device. The first device requests to establish the communication connection with the second device based on the pairing code. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience.

FIG. 2b is a flow chart illustrating a method for communication connection according to an embodiment of the disclosure. The method is performed by a first device. As illustrated in FIG. 2b, the method may include the following.

At step 201b, first information broadcasted by a second device is received, in which the first information is information obtained after the pairing code is encrypted with a first secret key.

For example, in some embodiments, the second device is a device that is to conduct a communication connection with the first device. For example, the second device may be a device that is to conduct a Bluetooth connection and/or an NFC connection with the first device.

For example, in some embodiments, the first information is obtained after the pairing code is encrypted with the first secret key. For example, the first secret key may be pre-configured in the first device and the second device. For example, the first secret key may be generated by a server and then delivered to the first device and the second device. Or the first secret key may be pre-written into the first device or the second device via a means of factory pre-configuration or other trusted means. For example, the pairing code may be a pairing code corresponding to the second device, and the pairing code is used by the first device to connect to the second device.

For example, in some embodiments, the method of encrypting the pairing code by the second device with the first secret key may, for example, include the following.

At step 1, the second device randomly generates a decimal pairing code (000000 ~ 999999) and converts the decimal pairing code into a 4-byte Big-Endian plain pairing code (denoted as "plainPairingCode") in hexadecimal (0x000000 ~ 0x0f423f).

At step 2, the second device randomly generates a 4-byte random number IV or agrees upon a fixed 4-byte IV with the first device in advance and obtains a nonce using a SHA256 algorithm based on the IV.

At step 3, a 4-byte cipher pairing code (denoted as "cipherPairingCode") is obtained by encrypting the plainPairingCode and the nonce using the first secret key (denoted as "secret") with an AES-128-CTR algorithm; where cipherPairingCode = AES_128_CTR (secret, plainPairingCode, nonce). It is understandable that the cipherPairingCode may be the first information described above.

At step 4, in a case where the IV is a random number, an 8-byte ciphertext is generated by concatenating the IV and the cipherPairingCode and is broadcast as part of broadcasted data (for example, broadcasted in an agreed-upon manner).

At step 5, in a case where the IV is agreed-upon data, the cipherPairingCode is directly broadcasted as part of broadcasted data (for example, broadcasted in an agreed-upon manner).

Thus, the second device may generate the first information by encrypting the pairing code with the first secret key and broadcast the first information by performing the above steps 1 to 5.

At step 202b, the first secret key is determined.

For example, in some embodiments, the method of determining the first secret key by the first device may include at least one of: receiving the first secret key sent by a server; or determining the first secret key pre-configured (for example, written by factory configuration or other trusted means) in the first device.

At step 203b, a communication connection is requested to be established with the second device based on the pairing code.

For example, in some embodiments, the method of requesting the establishment of the communication connection with the second device based on the pairing code in the step 203b may include the following.

At step a: the pairing code is obtained by decrypting the first information based on the first secret key.

For example, the method of obtaining the pairing code by decrypting the first information via the first device based on the first secret key may include: extracting the IV from the data broadcasted by the second device or determining the agreed-up IV; and decrypting the first information using the first secret key. With reference to the encryption process of the second device in the above steps 1 to 5, the first information includes the plainPairingCode and the nonce. Based on this, after decrypting the first information, the first device may first obtain the nonce by using an SHA256 algorithm based on the IV. Then, the information in the decrypted first information excluding the nonce is the plainPairingCode, and the pairing code may be obtained based on the plainPairingCode.

At step b: the pairing code is carried in the connection establishment request and sent to the second device, to request the establishment of the communication connection with the second device.

For example, after the second device receives the connection establishment request sent by the first device, the second device may first verify the first device based on the pairing code in the connection establishment request, and in a case where the verification is passed, the second device establishes the communication connection with the first device. For a detailed introduction regarding the verification of the first device by the second device, reference may be made to corresponding embodiments related to the second device side below.

With reference to the content of the above steps 201b to 203b, it may be seen that in the method for communication connection of the embodiments of the disclosure, when the first device needs to connect to the second device, the first device may obtain the first information broadcasted by the second device, in which the first information includes the pairing code, and the first information is obtained by encrypting the pairing code with the first secret key. Further, the first device also determines the first secret key, obtains the pairing code by decrypting the first information using the first secret key, and then establishes the communication connection with the second device based on the pairing code. Thus, it may be seen that in the method for communication connection of the embodiments of the disclosure, the connection is achieved through the interaction between the first device and the second device, without requiring user intervention. Thus, the disclosure provides a seamless connection method between devices, which has high efficiency, relatively convenient operation, and may also improve user experience.

Further, in the method for communication connection of the embodiments of the disclosure, the second device broadcasts the first information after obtaining the first information by encrypting the pairing code. Thus, direct exposure of the pairing code in the communication environment may be avoided, thereby preventing the pairing code from being maliciously intercepted by other devices and improving the security of the communication connection.

In conclusion, in the method for communication connection according to the embodiments of the disclosure, the first device receives the first information broadcasted by the second device, in which the second device is a device that is to conduct the communication connection with the first device, and the first information is obtained after the pairing code is encrypted with the first secret key. The pairing code is used by the first device in connecting to the second device. The first device further determines the first secret key and requests to establish the communication connection with the second device based on the pairing code. Thus, it may be seen that in the method for communication connection ofthe embodiments of the disclosure, the connection is achieved via the interaction between the first device and the second device, without requiring user intervention. Thus, the disclosure provides a seamless connection method between devices, which has high efficiency, relatively convenient operation, and may also improve user experience. Further, in the method for communication connection of the embodiments of the disclosure, the second device broadcasts the first information after obtaining the first information by encrypting the pairing code. Thus, direct exposure of the pairing code in the communication environment may be avoided, thereby preventing the pairing code from being maliciously intercepted by other devices and improving the security of the communication connection.

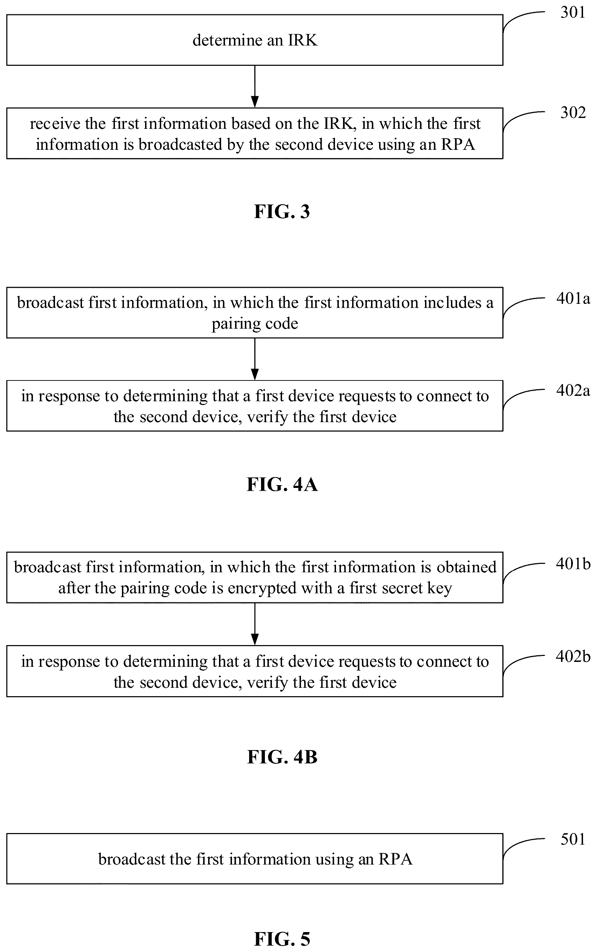

FIG. 3 is a flow chart illustrating a method for communication connection according to an embodiment of the disclosure. The method is performed by a first device. As illustrated in FIG. 3, the method may include the following.

At step 301, an identity resolving key (IRK) is determined.

For example, in an embodiment of the disclosure, the second device may use a resolvable private address (RPA) to broadcast the first information, and the IRK determined in step 301 may be the IRK corresponding to the RPA used in broadcasting the first information by the second device. The IRK may be used for resolving the RPA. For example, in some embodiments, the IRK may be pre-written into the first device in a trusted manner. For example, the IRK may be delivered to the first device by a server or may be written into the first device by means of factory pre-configuration or other trusted means.

The reason for introducing the RPA and the IRK, and the relationship between the RPA and the IRK are described in detail below.

The main reason why the second device uses the RPA to broadcast the first information in the embodiments of the disclosure is to allow the first device to successfully identify (or discover) the second device. Specifically, for the first device, the first device may scan information broadcasted by a plurality of devices. Thus, the first device typically needs to first determine, from all the information the first device scans, the information broadcasted by the second device (i.e., the first information). Then, the first device further uses the first secret key to decrypt the first information broadcasted by the second device to obtain the pairing code. Based on this, the RPA and the IRK are introduced, and the second device is enabled to use the RPA to broadcast the first information. After the first device scans the information, the first device may use the determined IRK to resolve the RPA of the scanned information. When the resolving of the RPA is successful, the first device confirms that the information is the first information sent by the second device.

Further, in some embodiments, the relationship between the RPA and the IRK may be: the RPA is an address generated using a random number Prand and the IRK. Specifically, an RPA may include a 24-bit Prand and a 24-bit HASH, in which the HASH is a function of the IRK and the Prand, HASH = ah (IRK, Prand). Based on this, the method of resolving the RPA by the first device using the IRK may include: after the first device receives the broadcasted information, the first device may first resolve the RPA corresponding to the information, and extract the HASH and the Prand from the RPA. Then, the first device uses the IRK determined in step 301 as long as the extracted Prand to generate a local HASH value, and compares whether a local HASH value is consistent with a HASH value extracted from the RPA. In a case where the local HASH value is consistent with the HASH value, it is determined that the resolving is successful, indicating that the information is sent by the second device. In a case where the local HASH value is inconsistent with the HASH value, it is determined that the resolving fails, indicating that the information is not sent by the second device.

Thus, it may be seen that in the embodiments of the disclosure, by introducing the RPA and the IRK, the first device may confirm which information is the first information broadcasted by the second device, thus achieving discovery of the second device by the first device and ensuring that the first device may successfully establish a connection with the second device. Meanwhile, after introducing the RPA and the IRK, for a device that does not know the IRK of the second device, the device cannot resolve the first information broadcasted by the second device at all, and thus cannot know the pairing code included in the first information. Thus, under the dual protection of the IRK and the first secret key, leakage of the pairing code in the first information broadcasted by the second device may be prevented, thereby ensuring the security of the communication connection.

For example, in some embodiments, the method of determining the IRK by the first device may include at least one of: receiving the IRK sent by a server; or determining the IRK pre-configured in the first device (for example, written by means of factory configuration or other trusted means).

At step 302, the first information broadcasted by the second device using an RPA is received based on the IRK.

For example, in some embodiments, the first device may receive the first information based on the IRK determined in the above step 301, in which the first information is broadcasted by the second device using an RPA. For a detailed introduction regarding this part, reference may be made to the description in the above embodiments.

In conclusion, in the method for communication connection according to the embodiments of the disclosure, the second device uses the RPA to broadcast the first information. The first device determines the IRK of the second device. Meanwhile, the first device uses the IRK of the second device to receive the first information broadcasted by the second device using the RPA. Thus, by introducing the RPA and the IRK, discovery of the second device by the first device may be achieved, thereby ensuring that the first device may successfully establish a connection with the second device. Meanwhile, after introducing the RPA and the IRK, for a device that does not know the IRK of the second device, the device cannot resolve the first information broadcasted by the second device at all, and thus cannot know the pairing code included in the first information. Thus, under the dual protection of the IRK and the first secret key, leakage of the pairing code in the first information broadcasted by the second device may be prevented, thereby ensuring the security of the communication connection.

FIG. 4a is a flow chart illustrating a method for communication connection according to another embodiment of the disclosure. The method is performed by a second device. As illustrated in FIG. 4a, the method may include the following.

At step 401a, first information is broadcasted, in which the first information includes a pairing code.

For example, the pairing code is used in connecting to the second device. For example, the pairing code is used in establishing a Bluetooth connection and/or an NFC connection to the second device.

For a detailed introduction regarding step 401a, reference may be made to the description in the above embodiments.

At step 402a, in response to determining that a first device requests to connect to the second device, the first device is verified.

For example, in some embodiments, when the second device receives a connection establishment request including the pairing code sent by the first device, the second device determines that the first device requests a connection to the second device.

For example, in some embodiments, the method of verifying the first device by the second device may include: verifying whether the pairing code in the connection establishment request is consistent with a pairing code stored by the second device (such as a pairing code stored locally in the second device); in a case where the pairing code in the connection establishment request is consistent with the pairing code stored by the second device, determining that verification is passed and establishing a communication connection with the first device to achieve communication between devices; in a case where the pairing code in the connection establishment request is inconsistent with the pairing code stored by the second device, determining that verification fails and not establishing a communication connection with the first device.

In conclusion, in the method for communication connection according to the embodiments of the disclosure, the second device broadcasts the first information, in which the first information is obtained after the pairing code is encrypted with the first secret key. The pairing code is used in connecting to the second device. In a case where the second device determines that the first device requests the connection to the second device, the second device verifies the first device and establishes the communication connection with the first device when the verification is passed. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience.

FIG. 4b is a flow chart illustrating a method for communication connection according to another embodiment of the disclosure. The method is performed by a second device. As illustrated in FIG. 4b, the method may include the following.

At step 401b, first information is broadcasted, in which the first information is obtained after the pairing code is encrypted with a first secret key.

For example, the pairing code is used in connecting to the second device. For example, the pairing code is used in establishing a Bluetooth connection and/or an NFC connection to the second device.

At step 402b, in response to determining that a first device requests to connect to the second device, the first device is verified.

For a detailed introduction regarding steps 401b to 402b, reference may be made to the description in the above embodiments.

In conclusion, in the method for communication connection according to the embodiments of the disclosure, the second device broadcasts the first information, in which the first information includes the pairing code. The pairing code is used in connecting to the second device. In a case where the second device determines that the first device requests the connection to the second device, the second device verifies the first device and establishes the communication connection with the first device when the verification is passed. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience. Further, in the method for communication connection of the embodiments of the disclosure, the second device broadcasts the first information after obtaining the first information by encrypting the pairing code. Thus, direct exposure of the pairing code in the communication environment may be avoided, thereby preventing the pairing code from being maliciously intercepted by other devices and improving the security of the communication connection.

FIG. 5 is a flow chart illustrating a method for communication connection according to another embodiment of the disclosure. The method is performed by a second device. As illustrated in FIG. 5, the method may include the following.

At step 501, the first information is broadcasted using an RPA.

For a detailed introduction regarding step 501, reference may be made to the description in the above embodiments.

In conclusion, in the method for communication connection according to the embodiments of the disclosure, the second device uses the RPA to broadcast the first information. The first device determines the IRK of the second device. Meanwhile, the first device uses the IRK of the second device to receive the first information broadcasted by the second device using the RPA. Thus, by introducing the RPA and the IRK, discovery of the second device by the first device may be achieved, ensuring that the first device may successfully establish the connection with the second device. Meanwhile, after introducing the RPA and the IRK, for a device that does not know the IRK of the second device, the device cannot resolve the first information broadcasted by the second device at all, and thus cannot know the pairing code included in the first information. Thus, under the dual protection of the IRK and the first secret key, leakage of the pairing code in the first information broadcasted by the second device may be prevented, thereby ensuring the security of the communication connection.

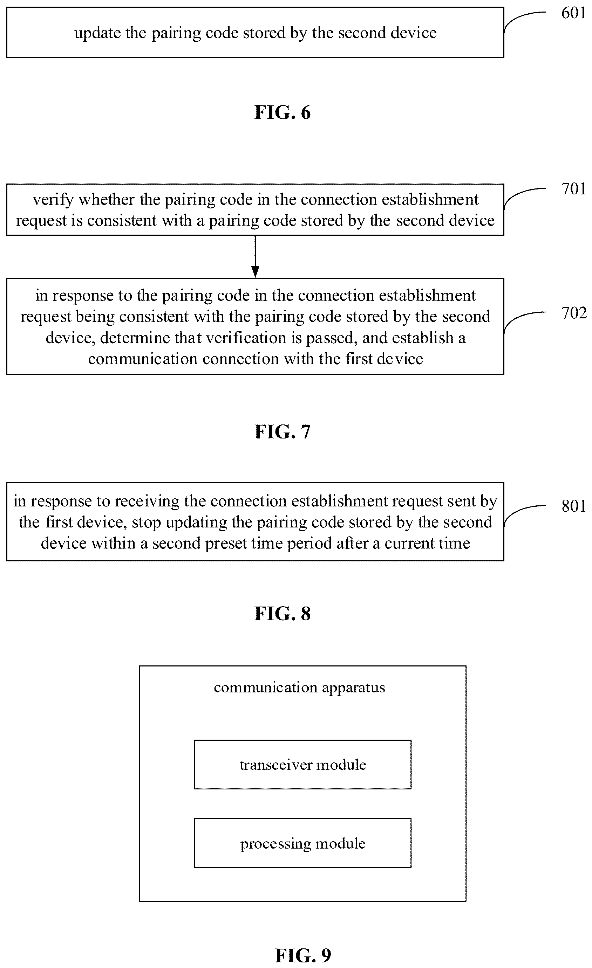

FIG. 6 is a flow chart illustrating a method for communication connection according to another embodiment of the disclosure. The method is performed by a second device. As illustrated in FIG. 6, the method may include the following.

At step 601, the pairing code stored by the second device is updated.

It is possible that the pairing code stored by the second device is leaked, which would affect the security of the communication connection. Thus, in some embodiments, the second device may update the pairing code stored by the second device in real time or periodically (for example, update every 30 seconds). Further, the first information broadcasted by the second device is information obtained after a latest pairing code stored by the second device is encrypted with a first secret key.

Thus, it may be seen that in the embodiments of the disclosure, the second device updates the pairing code, and the second device encrypts and broadcasts the latest pairing code, so that other devices (such as the first device) may know the latest pairing code and thus use the latest pairing code to request the establishment of the communication connection with the second device. In other words, in the embodiments of the disclosure, the first device always uses the latest pairing code to establish the communication connection with the second device. The historically updated pairing code is invalid and cannot be used to establish the communication connection with the second device. Thus, even if the pairing code stored by the second device is leaked at a certain time, as the pairing code stored by the second device is always updated, the leaked pairing code may not affect the security of the communication connection.

In conclusion, in the method for communication connection according to the embodiments of the disclosure, the second device updates the pairing code stored therein, and always uses the latest pairing code to establish the communication connection with the first device. The pairing code obtained from historical updates is invalid and cannot be used to establish the communication connection with the second device. Thus, even if the pairing code stored by the second device is leaked at a certain time, as the pairing code stored by the second device is always updated, the leaked pairing code may not affect the security of the communication connection. This solves the technical problem of communication connection security being affected due to the leakage of the pairing code.

FIG. 7 is a flow chart illustrating a method for communication connection according to another embodiment of the disclosure. The method is performed by a second device. As illustrated in FIG. 7, the method may include the following.

At step 701, it is verified whether the pairing code in the connection establishment request is consistent with a pairing code obtained in each update performed by the second device within a first preset time period before a current time.

At step 702, in a case where the pairing code in the connection establishment request is consistent with the pairing code obtained in one update performed by the second device within the first preset time period before the current time, it is determined that the verification is passed, and the communication connection is established with the first device.

For example, in some embodiments, since the pairing code stored by the second device is always updated, the following situation may occur. For example, the second device broadcasts first information encrypted with a first secret key at a first time point, in which the latest pairing code stored by the second device at the first time point is a first pairing code. Then the pairing code included in the first information broadcasted at the first time point is the first pairing code. Further, the first device receives the first information and obtains the first pairing code by decrypting the first information using the first secret key, and the first device sends a connection establishment request to the second device, in which the connection establishment request includes the first pairing code. However, the second device has updated its stored pairing code before receiving the connection establishment request sent by the first device. In this case, the latest pairing code in the second device is a second pairing code, instead of the first pairing code. Then, when the second device receives the connection establishment request sent by the first device, the establishment of the communication connection may fail because the first pairing code included in the connection establishment request is inconsistent with the latest second pairing code of the second device at the current time.

In view of this, in some embodiments, to prevent the occurrence of the above situation, the method of verifying the first device by the second device may include: verifying whether the pairing code in the connection establishment request is consistent with the pairing code obtained in each update performed by the second device within the first preset time period before the current time; and in a case where the pairing code in the connection establishment request is consistent with the pairing code obtained in one update performed by the second device within the first preset time period before the current time, determining that verification is passed, and establishing the communication connection with the first device. For example, in some embodiments, the first preset time period is at least greater than an update period of updating the pairing code by the second device.

For example, the update period of updating the pairing code by the second device is 30 seconds, and the first preset time period is 70 seconds. The method of verifying the first device by the second device may, for example, include: verifying whether the pairing code in the connection establishment request is consistent with the pairing code obtained in each update performed by the second device within 70 seconds before the current time. For example, it is verified whether the pairing code in the connection establishment request is consistent with the pairing code obtained in the most recent update of the second device, with the pairing code obtained in a previous update, or with the pairing code obtained in an update before the previous update. In a case where the pairing code in the connection establishment request is consistent with any one of the pairing code obtained in the most recent update of the second device, of the pairing code obtained in the previous update, or of the pairing code obtained in the update before the previous update, it is determined that the verification is successful.

In conclusion, in the method for communication connection according to the embodiments of the disclosure, the second device verifies whether the pairing code in the connection establishment request sent by the first device is consistent with the pairing code obtained in each update performed by the second device within the first preset time period before the current time. In a case where the pairing code in the connection establishment request is consistent with the pairing code obtained in one update performed by the second device within the first preset time period before the current time, the second device determines that verification is passed and establishes the communication connection with the first device. Thus, the following situation may be avoided where after the first device receives the first information broadcasted by the second device, the second device updates the pairing code stored by the second device, causing that the pairing code included in the connection establishment request sent by the first device is inconsistent with the latest pairing code stored by the second device, resulting in failure to establish the communication connection. Therefore, the method ensures that the first device and the second device may successfully establish the communication connection.

FIG. 8 is a flow chart illustrating a method for communication connection according to another embodiment of the disclosure. The method is performed by a second device. As illustrated in FIG. 8, the method may include the following.

At step 801, in a case where the connection establishment request sent by the first device is received, the second device stops updating the pairing code stored by the second device within a second preset time period after a current time.

For example, in some embodiments, after the second device receives the connection establishment request sent by the first device, the second device needs a period of time to parse the connection establishment request to obtain the pairing code included in the connection establishment request. Within this period of time during which the second device parses the connection establishment request, it is highly possible that the pairing code stored by the second device is updated. Thus, the pairing code included in the connection establishment request may become inconsistent with the latest pairing code of the second device at the current time, causing failure to establish the communication connection between the first device and the second device. In view of this, in some embodiments, when the second device receives the connection establishment request sent by the first device, the second device may stop updating the pairing code stored by the second device within a second preset time period after the current time. The second preset time period may be at least greater than a period of time required by the second device for parsing the connection establishment request. Thus, the following situation may be avoided where, during the period of time in which the second device parses the connection establishment request, the pairing code stored by the second device is updated, causing the pairing code included in the connection establishment request to be inconsistent with the latest pairing code of the second device at the current time, thus resulting in failure to establish the communication connection between the first device and the second device. Therefore, the method ensures that the first device and the second device may successfully establish the communication connection.

In conclusion, in the method for communication connection according to the embodiments of the disclosure, in response to the second device receiving the connection establishment request sent by the first device, the second device stops updating the pairing code stored by the second device within the second preset time period after the current time. Thus, the situation may be avoided where, during the period of time in which the second device parses the connection establishment request, the pairing code stored by the second device is updated, causing the pairing code included in the connection establishment request to be inconsistent with the latest pairing code of the second device at the current time, thus resulting in failure to establish the communication connection between the first device and the second device. Therefore, the method ensures that the first device and the second device may successfully establish the communication connection.

FIG. 9 is a block diagram illustrating a communication apparatus according to an embodiment of the disclosure. As illustrated in FIG. 9, the apparatus may include a transceiver module and a processing module.

The transceiver module is configured to receive first information broadcasted by a second device, in which the second device is a device that is to conduct a communication connection with the first device, the first information includes a pairing code, and the pairing code is used by the first device in connecting to the second device.

The processing module is configured to request an establishment of a communication connection with the second device based on the pairing code.

In conclusion, in the communication apparatus according to the embodiments of the disclosure, the first device receives the first information broadcasted by the second device, in which the first information includes the pairing code. The pairing code is used by the first device in connecting to the second device; and the first device requests to establish the communication connection with the second device based on the pairing code. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience.

For example, in an embodiment of the disclosure, the processing module is further configured to send a connection establishment request to the second device, in which the connection establishment request includes the pairing code.

For example, in an embodiment of the disclosure, the first information is information obtained after the pairing code is encrypted with a first secret key; and the apparatus is further configured to determine the first secret key.

For example, in an embodiment of the disclosure, the apparatus is further configured to perform at least one of: receiving the first secret key sent by a server; or determining the first secret key pre-configured in the first device.

For example, in an embodiment of the disclosure, the processing module is further configured to obtain the pairing code by decrypting the first information based on the first secret key; and send a connection establishment request to the second device, in which the connection establishment request includes the pairing code.

For example, in an embodiment of the disclosure, the apparatus is further configured to perform at least one of: receive an IRK sent by a server; or determine an IRK pre-configured in the first device, in which the IRK is used for resolving the second device.

For example, in an embodiment of the disclosure, the transceiver module is further configured to receive the first information broadcasted by the second device using an RPA based on the IRK.

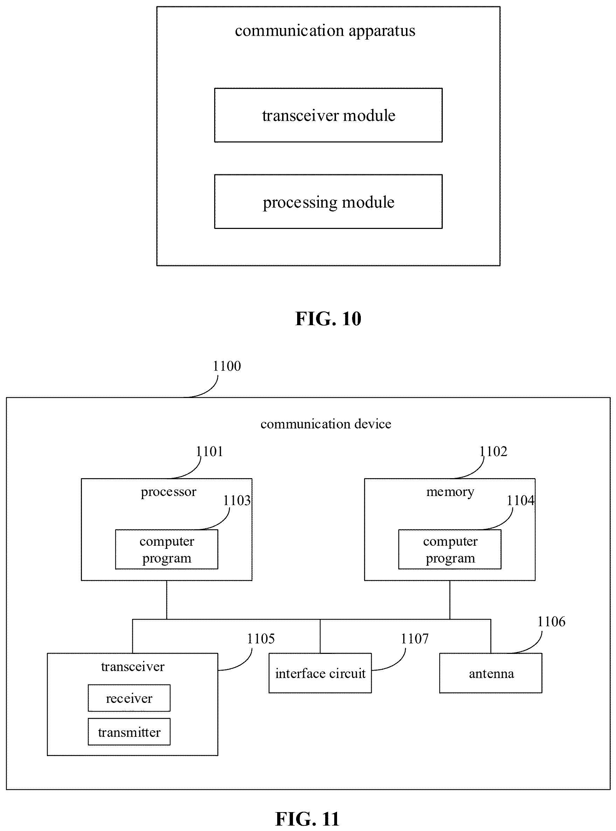

FIG. 10 is a block diagram illustrating a communication apparatus according to an embodiment of the disclosure. As illustrated in FIG. 10, the apparatus may include a transceiver module and a processing module.

The transceiver module is configured to broadcast first information, in which the first information includes a pairing code, and the pairing code is used in connecting to a second device.

The processing module is configured to, in response to determining that a first device requests a connection to the second device, verify the first device.

In conclusion, in the communication apparatus according to the embodiments of the disclosure, the second device broadcasts the first information, in which the first information includes the pairing code. The pairing code is used in connecting to the second device. In response to the second device determining that the first device requests the connection to the second device, the second device verifies the first device and establishes the communication connection with the first device when the verification is passed. Thus, it may be seen that in the method for communication connection of the embodiments of the disclosure, the connection is achieved via the interaction between the first device and the second device, without requiring user intervention. Thus, the disclosure provides a seamless connection method between devices, which has high efficiency, relatively convenient operation, and may also improve user experience.

For example, in an embodiment of the disclosure, the first information is obtained after the pairing code is encrypted with a first secret key.

For example, in an embodiment of the disclosure, the apparatus is further configured to broadcast the first information using an RPA.

For example, in an embodiment of the disclosure, the apparatus is further configured to, in response to receiving a connection establishment request sent by the first device, determine that the first device requests the connection to the second device, in which the connection establishment request includes a pairing code.

For example, in an embodiment of the disclosure, the processing module is further configured to verify whether the pairing code in the connection establishment request is consistent with a pairing code stored by the second device; and in response to the pairing code in the connection establishment request being consistent with the pairing code stored by the second device, determine that verification is passed, and establish a communication connection with the first device.

For example, in an embodiment of the disclosure, the apparatus is further configured to update the pairing code stored by the second device, in which the first information is obtained after a latest pairing code stored by the second device is encrypted with the first secret key.

For example, in an embodiment of the disclosure, the processing module is further configured to verify whether the pairing code in the connection establishment request is consistent with a pairing code obtained in each update performed by the second device within a first preset time period before a current time; and in response to the pairing code in the connection establishment request being consistent with the pairing code obtained in one update performed by the second device within the first preset time period before the current time, determine that verification is passed, and establish the communication connection with the first device.

For example, in an embodiment of the disclosure, the apparatus is further configured to, in response to receiving the connection establishment request sent by the first device, stop updating the pairing code stored by the second device within a second preset time period after a current time.

As illustrated in FIG. 11, FIG. 11 is a block diagram illustrating another communication device according to an embodiment of the disclosure. The communication device 1100 may be a base station, a terminal, a chip, a system on chip or a processor that supports the base station to implement the above method, or a chip, a system on chip or a processor that supports the terminal to implement the above method. The communication device 1100 may be configured to implement the methods described in the method embodiments, which may refer to descriptions in the method embodiments.

The communication device 1100 may include one or more processors 1101. The processor 1101 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a terminal, a terminal chip, a DU or CU, etc.), to execute a computer program, and process data of the computer program.

In some implementations, the communication device 1100 may further include one or more memories 1102 with a computer program 1104 stored. The computer program 1104 is executed by the processor 1101, so that the communication device 1100 perfo rms the method as described in the above method embodiments. In some implementations, the memory 1102 may further store data. The communication device 1100 and the memory 1102 may be independently configured or integrated together.

In some implementations, the communication device 1100 may further include a transceiver 1105 and an antenna 1106. The transceiver 1105 may be referred to as a transceiving unit, a transceiving machine or a transceiving circuit, which may be configured to achieve a transceiving function. The transceiver 1105 may include a receiver and a transmitter. The receiver may be referred to as a receiving machine or a receiving circuit, etc., for implementing a receiving function; and the transmitter may be referred to as a transmitting machine or a transmitting circuit, etc. for implementing a transmitting function.

In some implementations, the communication device 1100 may further include one or more interface circuits 1107. The interface circuit 1107 is configured to receive code instructions and transmit the code instructions to the processor 1101. The code instructions are executed by the processor 1101 so that the communication device 1100 performs the methods as described in the above method embodiments.

In some implementations, the processor 1101 may include a transceiver configured to implement receiving and transmitting functions. For example, the transceiver may be a transceiving circuit, an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In some implementations, the processor 1101 may include a computer program 1103. The computer program 1103 is executed by the processor 1101 so that the communication device 1100 performs the methods as described in the above method embodiments. The computer program 1103 may be solidified in the processor 1101, in which case the processor 1101 may be implemented by hardware.

In some implementations, the communication device 1100 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a base station or a terminal, but the scope of the communication device described in the disclosure is not limited, and a structure of the communication device may not be limited by FIG. 11. The communication device may be a stand-alone device or may be a part of a larger device. For example, the communication device may be the following:
(1) a stand-alone integrated circuit (IC), a chip, a chip system or a subsystem;
(2) a set of one or more ICs, for example which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle-mounted device, a base station, a cloud device, an artificial intelligence device, etc.;
(6) others, and so forth.

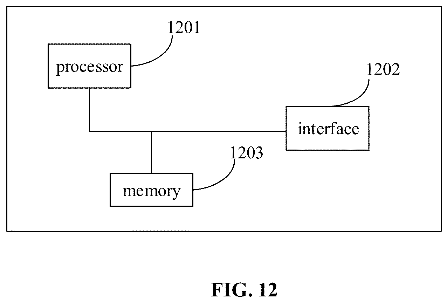

In the case that the communication device may be a chip or a chip system, a block diagram of a chip is illustrated in in FIG. 12. The chip illustrated in FIG. 12 includes a processor 1201 and an interface 1202. There may be one or more processors 1201 and there may be a plurality of interfaces 1202.

For example, the chip further includes a memory 1203, configured to save necessary computer programs and data.

Those skilled in the art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A readable storage medium having instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of precedence or magnitude between the technical features described in "first", "second", "third", "A", "B", "C" and "D".

Corresponding relationships indicated by tables in the disclosure may be configured or predefined. A value of information in the tables is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by the hardware or the software depends on a specific application and a design constraint of the technical solution. Those skilled in the art may adopt different methods for each specific application to implement the described functions, but such implementation should not be considered as going beyond the scope of the disclosure.

Those skilled in the art may clearly understand that, a specific working process of a system, an apparatus and a unit describ ed above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for communication connection, performed by a first device, comprising:
receiving first information broadcasted by a second device, wherein the second device is a device that is to conduct a communication connection with the first device, the first information comprises a pairing code, and the pairing code is used by the first device in connecting to the second device; and
requesting to establish a communication connection with the second device based on the pairing code.

2. The method according to claim 1, wherein requesting to establish the communication connection with the second device based on the pairing code comprises:
sending a connection establishment request to the second device, wherein the connection establishment request comprises the pairing code.

3. The method according to claim 1, wherein the first information is obtained after the pairing code is encrypted with a first secret key; and
the method further comprises:
determining the first secret key.

4. The method according to claim 3, wherein determining the first secret key comprises at least one of:
receiving the first secret key sent by a server; or
determining the first secret key pre-configured in the first device.

5. The method according to claim 3, wherein requesting to establish the communication connection with the second device based on the pairing code comprises:
obtaining the pairing code by decrypting the first information based on the first secret key; and
sending a connection establishment request to the second device, wherein the connection establishment request comprises the pairing code.

6. The method according to claim 1, further comprising at least one of:
receiving an identity resolving key (IRK) sent by a server; or
determining an identity resolving key (IRK) pre-configured in the first device,
wherein the IRK is used for resolving the second device.

7. The method according to claim 6, wherein receiving the first information broadcasted by the second device comprises:
receiving the first information based on the IRK, wherein the first information is broadcasted by the second device using a resolvable private address (RPA).

8. A method for communication connection, performed by a second device, comprising:
broadcasting first information, wherein the first information comprises a pairing code, and the pairing code is used in connecting to the second device; and
in response to determining that a first device requests to connect to the second device, verifying the first device.

9. The method according to claim 8, wherein the first information is obtained after the pairing code is encrypted with a first secret key.

10. The method according to claim 8, further comprising:
broadcasting the first information using a resolvable private address (RPA).

11. The method according to claim 8, further comprising:
in response to receiving a connection establishment request sent by the first device, determining that the first device requests to connect to the second device, wherein the connection establishment request comprises the pairing code.

12. The method according to claim 11, wherein verifying the first device comprises:
verifying whether the pairing code in the connection establishment request is consistent with a pairing code stored by the second device; and
in response to the pairing code in the connection establishment request being consistent with the pairing code stored by the second device, determining that verification is passed, and establishing a communication connection with the first device.

13. The method according to claim 12, further comprising:
updating the pairing code stored by the second device, wherein the first information is obtained after a latest pairing code stored by the second device is encrypted with a first secret key.

14. The method according to claim 13, wherein verifying the first device comprises:
verifying whether the pairing code in the connection establishment request is consistent with a pairing code obtained in each update performed by the second device within a first preset time period before a current time; and
in response to the pairing code in the connection establishment request being consistent with the pairing code obtained in one update performed by the second device within the first preset time period before the current time, determining that verification is passed, and establishing the communication connection with the first device.

15. The method according to claim 13, further comprising:
in response to receiving the connection establishment request sent by the first device, stopping updating the pairing code stored by the second device within a second preset time period after a current time.

16. A communication apparatus, comprising:
a transceiver module, configured to receive first information broadcasted by a second device, wherein the second device is a device that is to conduct a communication connection with the first device, the first information comprises a pairing code, and the pairing code is used by the first device in connecting to the second device; and
a processing module, configured to request to establish a communication connection with the second device based on the pairing code.

17. A communication apparatus, comprising:
a transceiver module, configured to broadcast first information, wherein the first information comprises a pairing code, and the pairing code is used in connecting to a second device; and
a processing module, configured to, in response to determining that a first device requests to connect to the second device, verify the first device.

18. A communication device, comprising a processor and a memory storing a computer program that, when executed by the processor, causes the communication device to implement the method according to any one of claims 1 to 7, or the method according to any one of claims 8 to 15.

19. A communication device, comprising: a processor and an interface circuit; wherein
the interface circuit is configured to receive code instructions and transmit the code instructions to the processor; and
the processor is configured to execute the code instructions to implement the method according to any one of claims 1 to 7, or the method according to any one of claims 8 to 15.

20. A computer-readable storage medium storing instructions that, when executed, cause the method according to any one of claims 1 to 7, or the method according to any one of claims 8 to 15 to be implemented.
